# EUROPÄISCHE PATENTSCHRIFT

(11) **EP 0 519 216 B1**
(45) Veröffentlichungstag und Bekanntmachung des Hinweises auf die Patenterteilung: **19.03.1997**
(21) Anmeldenummer: 92108200.4
(22) Anmeldetag: 15.05.1992
(51) Int. Cl.: G05D 16/10, G05D 16/20

(54) **Direktgesteuertes Druckregelventil**
Direct drive pressure-control valve
Régulateur de pression commandé directement

(30) Priorität: 27.05.1991 DE 4117291
(43) Veröffentlichungstag der Anmeldung: 23.12.1992
(73) Patentinhaber: BW HYDRAULIK GMBH, D-42327 Wuppertal (DE)
(72) Erfinder: Kuttruf, Werner, W-5600 Wuppertal 11 (DE)
(74) Vertreter: Behrendt, Arne

(56) Entgegenhaltungen:
- WO-A-88/10461
- DE-A- 2 310 193
- FR-A- 2 445 476
- GB-A- 2 152 638
- US-A- 4 936 340
- US-A- 4 971 114

## Beschreibung

Die Erfindung betrifft ein direktgesteuertes Druckregelventil für hydraulische Anlagen mit einem Ventilgehäuse mit einem Primäranschluß, einem Sekundäranschluß und einem Druckentlastungsanschluß, sowie mit einem Steuerglied in einer Gehäusebohrung und mit einem Betätigungselement zur Druckeinstellung.

Druckregelventile haben die Aufgabe, einen Primärdruck eines hydraulischen Druckmittels auf einen niedrigeren Sekundärdruck einzuregeln, weshalb sie auch Druckminderventile genannt werden. Im Falle einer Erhöhung des Sekundärdrucks infolge äußerer Einflüsse muß eine entsprechende Druckmittelmenge selbsttätig zum Tank abfließen können. Die Wirkungsweise von direktgesteuerten Druckregelventilen besteht im Grunde darin, daß die resultierende Kraft aus anstehendem Druckmitteldruck gegen eine Feder wirkt, die entsprechend dem einzustellenden Druckwert vorgespannt wird. Herrscht Kräftegleichgewicht, ist die Vorgabe des Betätigungselements an das Ventil in der Regel erfüllt.

Werden Druckregelventile größerer Bauart (etwa ab NG10) benötigt, kann bei direkter Betätigung des Steuergliedes die dafür erforderliche Federkraft nicht mehr sinnvoll realisiert werden. Man geht deshalb dazu über, solche Ventile mit einer hydraulischen Vorsteuerung auszustatten. Werden Druckregelventile mit Fernverstellung, z. B. mittels Proportionalmagnet, ausgestattet, ist auch schon bei kleineren Baugrößen eine Vorsteuerung erforderlich.

Die Aufgabe der Erfindung besteht darin, ein direktgesteuertes Druckregelventil in einer weiterentwickelten Ausführung bereitzustellen, bei dem Rückwirkungen aus dem Betriebsdruck auf das Steuerglied vermieden bzw. neutralisiert werden, so daß das Steuerglied nahezu kraftlos und unabhängig vom Einstelldruck verstellbar ist. Dabei soll das Ventil einfach gestaltet sein und eine hohe Funktionssicherheit gewährleisten.

Gemäß der Erfindung besteht die Lösung dieser Aufgabe bei einem Druckregelventil der eingangs beschriebenen Art in der Anwendung folgender Merkmale:
a) in der Gehäusebohrung ist eine durch eine Arbeitsfeder belastete Steuerhülse axial beweglich gelagert, die am inneren Ende einen mit dem Druckentlastungsanschluß verbundenen Raum begrenzt und außen als Ringkolben ausgebildet ist, der in der Gehäusebohrung einen Steuerdruckraum begrenzt, der ständig mit dem Sekundäranschluß verbunden ist und dessen Innendruck der Federkraft der Arbeitsfeder entgegen wirkt,
b) die Steuerhülse enthält in ihrer Hülsenbohrung einen durch eine Steuerfeder belasteten Steuerschieber mit drei mit axialem Abstand hintereinanderliegenden Kolben mit gleichem Durchmesser, von denen der mittige Kolben in der Grundstellung eine Umfangsnut in der Steuerhülse überdeckt, während zwischen je einem äußeren Kolben und dem mittigen Kolben je eine weitere, in der Steuerhülse befindliche Umfangsnut freiliegt, wobei jede der Umfangsnuten über radiale Bohrungen mit je einer Umfangsnut in der Gehäusebohrung verbunden ist, von denen die mittige an den Sekundäranschluß und die beiden äußeren an den Primäranschluß bzw. den Druckentlastungsanschluß angeschlossen sind, und
c) der Steuerschieber ist von außen aus seiner vorerwähnten Grundstellung gegen die Kraft der Steuerfeder zur Druckvorgabe axial einstellbar.

Ein wesentlicher Vorteil, den ein solches Druckregelventil bietet, besteht darin, daß sich der Betriebs- oder Einstelldruck auf den Steuerschieber nicht auswirkt. An diesem greift lediglich die Kraft einer verhältnismäßig kleinen Steuerfeder an. Eine solche Steuerfeder kann auch noch entfallen, wenn das einzusetzende Betätigungselement formschlüssig mit dem Steuerschieber verbunden wird und ziehend oder schiebend auf den Steuerschieber einwirken würde. Bei automatisierten Druckeinstellungen ergibt sich daraus die Möglichkeit, mit geringen Antriebsleistungen bei relativ kurzen Stellzeiten auszukommen.

Vorteilhafte Weiterbildungen des neuartigen Druckregelventils sind in den Unteransprüchen beschrieben.

Am mittleren Kolben des Steuerschiebers sind vorteilhafterweise seine entgegengesetzten Stirnenden als Steuerkanten ausgebildet, wobei eine erste Steuerkante in der Verbindung von P nach A und eine zweite Steuerkante in der Verbindung von A nach T liegt.

Der Ringkolben kann auch als selbständiges Bauteil ausgebildet sein und auf geeignete Weise mit der Steuerhülse formschlüssig in Verbindung stehen.

Sowohl die Steuerfeder als auch die Arbeitsfeder sind zweckmäßigerweise als Schraubendruckfedern ausgebildet.

Nach einer anderen vorteilhaften Weiterbildung ist der Steuerschieber an seinem äußeren Ende mit einer aus dem Ventilgehäuse herausragenden Verlängerung ausgestattet, die mit einem Betätigungselement zur Axialverstellung direkt oder indirekt in Verbindung steht. Hierbei kann das Betätigungselement einen Spindeltrieb und einen Elektromotor, z. B. einen Schrittmotor, aufweisen.

Nachfolgend wird die Erfindung anhand eines in der Zeichnung schematisch dargestellten Ausführungsbeispiels eines Druckregelventils ausführlich erläutert. Es zeigt:
- Fig. 1: einen Axialschnitt eines Druckregelventils in der ausgeregelten Grundstellung in Verbindung mit einem Betätigungselement,
- Fig. 2: einen Axialschnitt des Druckregelventils allein nach Fig. 1 in einem Zustand, bei dem der Sekundärdruck niedriger ist als der Vorgabedruck und
- Fig. 3: einen weiteren Axialschnitt des Druckregelventils allein nach Fig. 1 in einem Zustand, bei dem der Sekundärdruck höher ist als der Vorgabedruck.

Das abgebildete Druckregelventil enthält ein Ventilgehäuse (1), welches unterschiedlich gestaltet sein kann, mit einer Innenbohrung (2), die sich zusammensetzt aus einem ersten längeren Abschnitt (3) und einem zweiten kürzeren Abschnitt (4) mit größerem Innendurchmesser. In der Innenbohrung (2) ist eine Steuerhülse (5) axial beweglich geführt, von der ein innerer Abschnitt mit größerem Außendurchmesser einen Ringkolben (6) bildet, der mit der Schulterfläche (7) zwischen den Bohrungsabschnitten (3 und 4) einen Steuerdruckraum (8) begrenzt.

Ein weiteres Funktionsteil des Druckregelventils ist ein Steuerschieber (9) mit drei mit Abstand aufeinanderfolgenden Kolben (10, 11 und 12), die axial gleitbeweglich in der zylindrischen Innenbohrung (13) der Steuerhülse (5) geführt sind. Das äußere freie Ende (14) des Steuerschiebers (9) ragt aus dem Gehäuse (1) heraus und steht unter der Einwirkung eines Betätigungselements, auf das nachfolgend noch eingegangen wird.

Zwischen dem inneren Kolben (12) und dem Boden (15) der topfartig ausgebildeten Steuerhülse ist eine Schraubendruckfeder (16) eingespannt, die als Steuerfeder bezeichnet ist und die Aufgabe hat, den Steuerschieber (9) mit einem Betätigungselement (17) in Druckberührung zu halten.

Das Ventilgehäuse (1) enthält drei Anschlüsse in Form von radial verlaufenden Bohrungen, nämlich eine Bohrung (18) als Primäranschluß, eine Bohrung (19) als Sekundäranschluß und eine Bohrung (20) als Druckentlastungsanschluß. Die Bohrungen münden je in eine umlaufende Nut (18.1, 19.1 und 20.1) in der Wandung der Gehäusebohrung (2), Abschnitt (3). Von der Bohrung (19) führt ein Verbindungskanal (21) zum Steuerdruckraum (8). Eine weitere umlaufende Nut (22), die vor der umlaufenden Nut (18.1) liegt, ist über eine Umgehungsleitung (23) mit der umlaufenden Nut (20.1) verbunden, wobei die Umgehungsleitung (23) an endseitige Räume (24 und 25) angeschlossen ist, mit dem Zweck, eventuelle Leckverluste zur Bohrung (20) und damit zum Tank ableiten zu können.

Die aus dem Druckmitteldruck im Steuerdruckraum (8) resultierende Kraft wirkt gegen die Kraft einer Schraubendruckfeder (26), bezeichnet als Arbeitsfeder, die mit ihrem rückwärtigen Ende am Boden eines Federgehäuses (27) anliegt, welches mit dem Ventilgehäuse (1) in geeigneter Weise lösbar verbunden ist. Der Innenraum des Federgehäuses (27) schließt an den endseitigen Raum (25) an. Weiter ist durch eine Bohrung (28) im Boden (15) der Steuerhülse (5) eine Verbindung des Zylinderraumes (29) mit dem Raum (25) geschaffen.

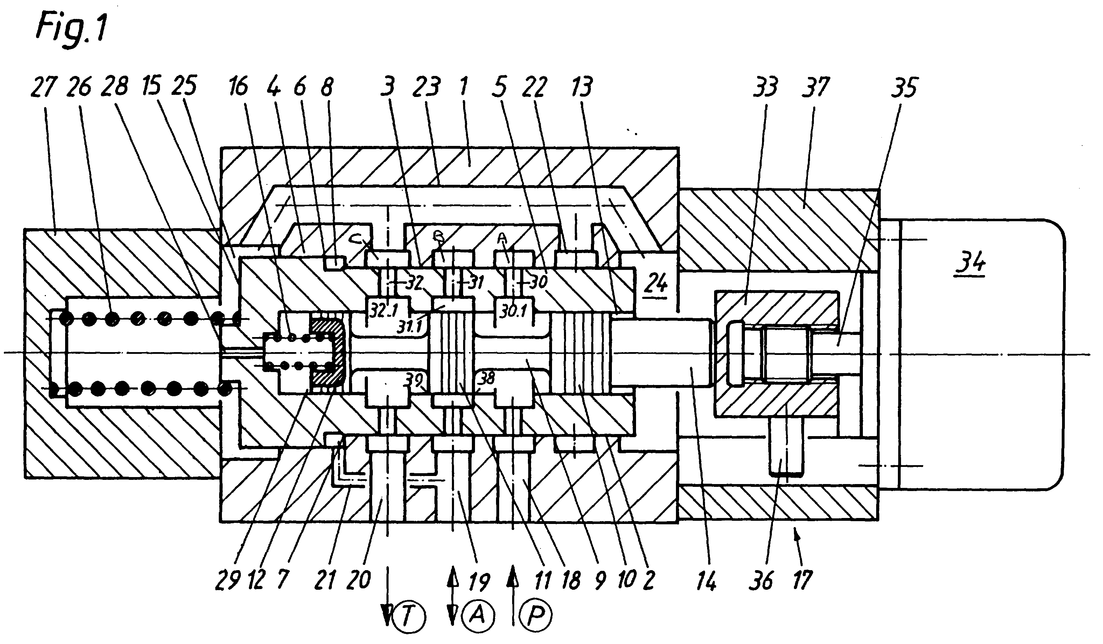

Wie die Fig. 1 zeigt, enthält die Steuerhülse (5) den umlaufenden Nuten (18.1, 19.1 und 20.1) zugeordnete Radialbohrungen (30, 31 und 32), die je in eine umlaufende Nut (30.1, 31.1 und 32.1) in der Wandung der zylindrischen Bohrung (13) der Steuerhülse (5) münden.

Bei dem dargestellten Ausführungsbeispiel umfaßt das Betätigungselement (17) einen Spindeltrieb mit einer Wandermutter (33), die auf einer von einem Motor (34) angetriebenen Spindel (35) axial beweglich, jedoch unverdrehbar geführt ist. Zur Sicherung gegen Verdrehen dient ein Stift (36), der in einer Längsnut (37) gleitbeweglich geführt ist. An der freien Stirnfläche der Wandermutter (33), liegt der Steuerschieber (9) unter der Einwirkung der Kraft der Steuerfeder (16) an. Je nach der Drehrichtung der Spindel (35) und damit der Richtung der Bewegung der Wandermutter (33) bewegt sich der Steuerschieber (9) in die eine oder andere Richtung. Durch diese Bewegungen wird der Vorgabedruck eingestellt, wie nachstehend noch erläutert wird.

Der Motor (34) ist durch ein Zwischenstück (37) mit dem Ventilgehäuse (1) fest verbunden. Die in der Zeichnung dargestellte Betätigung des Druckregelventils zeigt eine beispielhafte Lösung. Ebensogut können andere Arten von Betätigungsorganen benutzt werden.

Funktionsweise des Druckregelventils:

### A. Grundstellung (Fig. 1)

Die Steuerhülse (5) ist durch die entspannte Arbeitsfeder (26) in ihre rechte Endstellung geschoben. Ebenso wird der Steuerschieber (9) durch die Kraft der Steuerfeder (16) ganz nach rechts geschoben. Das Betätigungselement (17) dient in dieser min-Stellung als Anschlag für den Steuerschieber (9).

Am Primäranschluß (18) steht das Druckmittel mit hohem Primärdruck an. In dieser Stellung ist der Weiterfluß gesperrt. Da die Angriffsflächen an den Kolben (10 und 11) gleich groß sind, heben sich die wirksamen Druckmittelkräfte am Steuerschieber (9) auf.

Der Sekundäranschluß (19), von dem eine Leitung zum nicht dargestellten Verbraucher führt, ist durch den Kolben (11) (positive überdeckung) abgesperrt. Der im Sekundäranschluß (19) herrschende Druck ist auch im Steuerdruckraum (8) wirksam. Der Entlastungsanschluß (20) ist geöffnet.

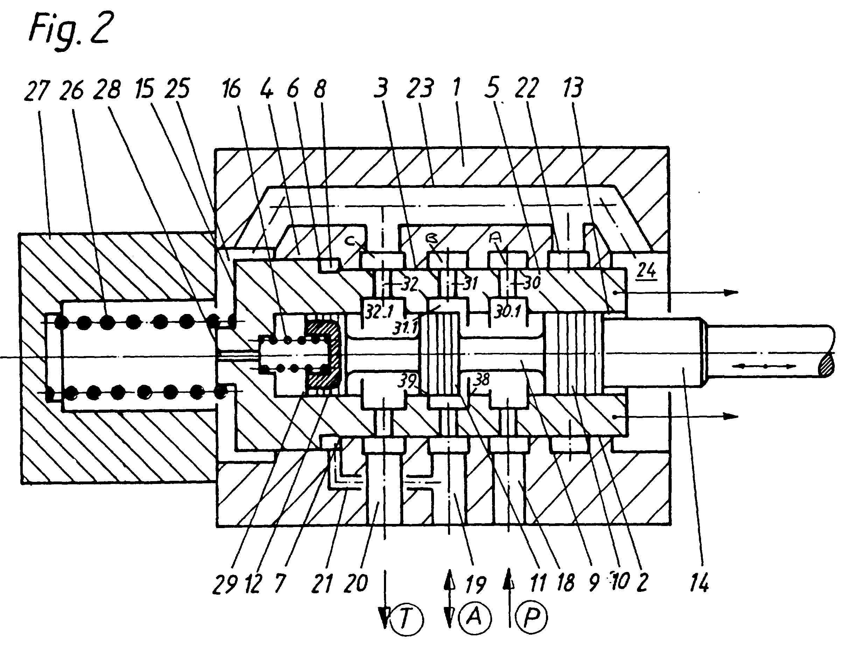

### B. Druck am Sekundäranschluß ist niedriger als die Vorgabe (Fig. 2)

Wird der Steuerschieber (9) gegen die Steuerfeder (16) nach links geschoben, gibt die Steuerkante (38) des Kolbens (11) die Verbindung zwischen dem Primäranschluß (18) und dem Sekundäranschluß (19) frei; das Druckmittel fließt über den Sekundäranschluß (19) zum Verbraucher. Der im Sekundäranschluß (19) herrschende Druck tritt auch im Steuerdruckraum (8) auf. über die wirksame Fläche des Ringkolbens reagiert die Steuerhülse gegen die Arbeitsfeder (26).

Steigt der Druck im Sekundäranschluß (19) an, läuft die Steuerhülse (5) gemäß der Kennlinie der Arbeitsfeder (26) nach links. Diese Bewegung endet, wenn im Sekundäranschluß (19) der Druck mit dem vorgegebenen Druckwert übereinstimmt. Gleichzeitig wird durch die positive überdeckung der Ringnut (31.1) durch den Kolben (11) die Verbindung vom Primäranschluß (18) zum Sekundäranschluß (19) geschlossen.

Wird der Steuerschieber (9) vom Betätigungselement (17) in seine maximale Endstellung nach links verschoben, läuft auch die Steuerhülse (5) gemäß der Kennlinie der Arbeitsfeder (26) bis zum maximalen Druck nach links. Zwischen den beiden möglichen Endstellungen des Steuerschiebers (9) sind auf diese Weise alle gewünschten Zwischenwerte für den Druck im Sekundäranschluß (19) und damit für den Verbraucher einstellbar. In jedem Betriebszustand wirkt auf die Steuerhülse als Gegendruck zur Arbeitsfeder (26) nur der jeweilige Druck im Steuerdruckraum (8); alle anderen hydraulischen Krafteinwirkungen bleiben neutral.

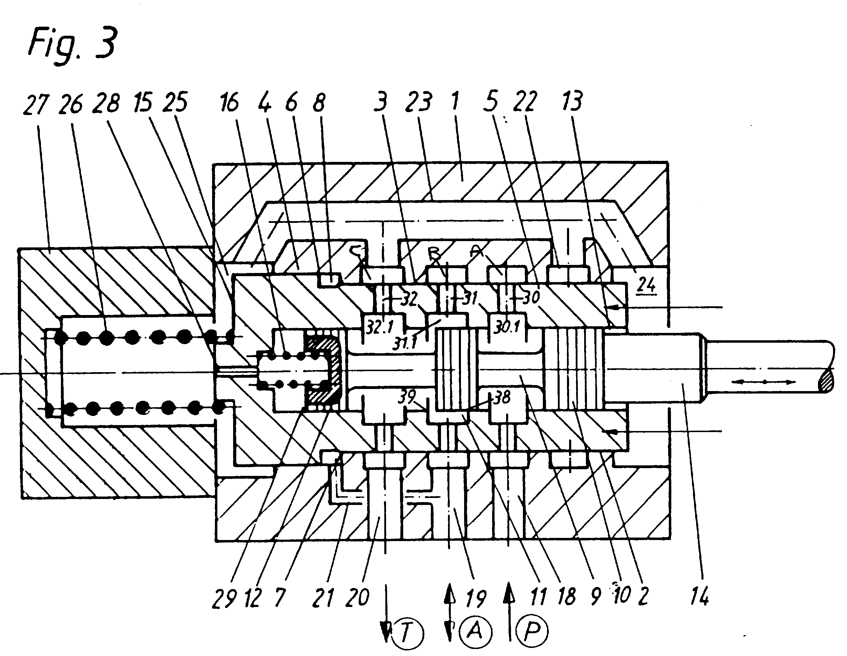

### C. Druck am Sekundäranschluß ist höher als die Vorgabe (Fig. 3)

Steigt der Druck im Sekundäranschluß (19) ohne eine Veränderung am Betätigungselement (17), bewegt sich die Steuerhülse (5) als Folge des Druckanstiegs im Steuerdruckraum (8) nach links, womit die Steuerkante (39) des Kolbens (11) freigegeben wird und Druckmittel vom Sekundäranschluß (19) zum Entlastungsanschluß (20) und damit zum Tank abfließen kann. Mit dem Nachlassen des Druckes im Steuerdruckraum (8) kehrt die Steuerhülse (5) wieder in ihre Ausgangslage zurück, wodurch die Verbindung vom Sekundäranschluß (19) zum Entlastungsanschluß (20) wieder versperrt wird.

In gleicher Weise wird auch ein eventueller Druckabfall im Sekundäranschluß (19) ohne eine Veränderung am Betätigungselement (17) durch den Einfluß der Arbeitsfeder (26) selbsttätig ausgeregelt.

Die vorstehende Beschreibung der grundsätzlichen Funktionsweise des neuen Druckregelventils zeigt noch einmal deutlich, daß der Betriebs- bzw. Einstelldruck ohne Rückwirkungen auf den Steuerschieber (9) und damit auch auf das Betätigungsorgan (17) ist. Für das Bewegen des Steuerschiebers (9) in Richtung zum maximalen Einstellwert ist lediglich die Kraft der relativ kleinen Steuerfeder (16) zu überwinden. Auch diese Steuerfeder ist entbehrlich, wenn das einzusetzende Betätigungselement (17) formschlüssig mit dem Steuerschieber verbunden wird, so daß der Steuerschieber (9) in beiden Bewegungsrichtungen synchron mit dem Betätigungselement (17) bewegbar ist.

## Patentansprüche

1. Direktgesteuertes Druckregelventil für hydraulische Anlagen mit einem Ventilgehäuse mit einem Primäranschluß (18), einem Sekundäranschluß (19) und einem Druckentlastungsanschluß (20), sowie mit einem Steuerglied in einer Gehäusebohrung und mit einem Betätigungselement zur Druckeinstellung, gekennzeichnet durch folgende Merkmale:
a) in der Gehäusebohrung (3, 4) ist eine durch eine Arbeitsfeder (26) belastete Steuerhülse (5) axial beweglich gelagert, die am inneren Ende einen mit dem Druckentlastungsanschluß (20) verbundenen Raum (25) begrenzt und außen als Ringkolben (6) ausgebildet ist, der in der Gehäusebohrung (4) einen Steuerdruckraum (8) begrenzt, der ständig mit dem Sekundäranschluß (19) verbunden ist und dessen Innendruck der Federkraft der Arbeitsfeder (26) entgegen wirkt,
b) die Steuerhülse (5) enthält in ihrer Hülsenbohrung (13) einen durch eine Steuerfeder (16) belasteten Steuerschieber (9) mit drei mit axialem Abstand hintereinanderliegenden Kolben (10, 11, 12) mit gleichem Durchmesser, von denen der mittige Kolben (11) in der Grundstellung eine Umfangsnut (31.1) in der Steuerhülse (5) überdeckt, während zwischen je einem äußeren Kolben (10, 12) und dem mittigen Kolben (11) je eine weitere, in der Steuerhülse (5) befindliche Umfangsnut (30.1 und 32.1) freiliegt, wobei jede der Umfangsnuten (30.1, 31.1 und 32.1) über radiale Bohrungen (30, 31 und 32) mit je einer Umfangsnut (A, B und C) in der Gehäusebohrung (3) verbunden ist, von denen die mittige (B) an den Sekundäranschluß (19) und die beiden äußeren (A und C) an den Primäranschluß (18) bzw. den Druckentlastungsanschluß (20) angeschlossen sind, und
c) der Steuerschieber (9) ist von außen aus seiner vorerwähnten Grundstellung gegen die Kraft der Steuerfeder (16) zur Druckvorgabe axial einstellbar.

2. Druckregelventil nach Anspruch 1, dadurch gekennzeichnet, daß am mittigen Kolben (11) des Steuerschiebers (9) seine entgegengesetzten Stirnenden eine erste Steuerkante (38) in der Verbindung vom Primäranschluß (18) zum Sekundäranschluß (19) und eine zweite Steuerkante (39) in der Verbindung vom Sekundäranschluß (19) zum Druckentlastungsanschluß (20) bilden.

3. Druckregelventil nach Anspruch 1 oder 2, dadurch gekennzeichnet, daß Ringkolben und Steuerhülse zweiteilig ausgebildet sind.

4. Druckregelventil nach einem der Ansprüche 1 bis 3, dadurch gekennzeichnet, daß die Arbeitsfeder (26) als Schraubendruckfeder ausgebildet ist, die sich mit ihrem von der Steuerhülse (5) abgewandten Ende in einem Federgehäuse (27) abstützt.

5. Druckregelventil nach einem der Ansprüche 1 bis 4, dadurch gekennzeichnet, daß die Steuerfeder (16) als Schraubendruckfeder ausgebildet ist, die sich mit ihrem vom Steuerschieber (9) abgewandten Ende am Boden der Steuerhülse (5) abstützt.

6. Druckregelventil nach einem der Ansprüche 1 bis 5, dadurch gekennzeichnet, daß der Steuerschieber (9) an seinem äußeren Ende eine aus dem Ventilgehäuse (1) herausragende Verlängerung (14) aufweist, die mit einem Betätigungselement (17) zur Axialverstellung direkt oder indirekt in Verbindung steht.

7. Druckregelventil nach Anspruch 6, dadurch gekennzeichnet, daß das Betätigungselement (17) einen Spindeltrieb (35, 33) und einen Elektromotor (34), z. B. einen Schrittmotor, aufweist.

## Claims

1. A directly controlled pressure regulating valve for hydraulic installations comprising a valve housing having a primary connection (18), a secondary connection (19) and a pressure relief connection (20), a control member in a housing bore and an actuating element for pressure setting, characterised by the following features:
a) axially movably mounted in the housing bore (3, 4) is a control sleeve (5) which is loaded by a working spring (26) and which at the inner end defines a chamber (25) connected to the pressure relief connection (20) and which at the outside is in the form of an annular piston (6) which defines in the housing bore (4) a control pressure chamber (8) which is permanently communicated with the secondary connection (19) and whose internal pressure acts in opposition to the spring force of the working spring (26),
b) the control sleeve (5) contains in its sleeve bore (13) a control spool (9) loaded by a control spring (16), with three pistons (10, 11, 12) of the same diameter which are arranged at axial spacings in succession and of which the central piston (11) in the basic position covers over a peripheral groove (31.1) in the control sleeve (5) while a respective further peripheral groove (30.1 and 32.1) in the control sleeve (5) is exposed between a respective outer piston (10, 12) and the central piston (11), wherein each of the peripheral grooves (30.1, 31.1 and 32.1) is communicated by way of radial bores (30, 31 and 32) with a respective peripheral groove (A, B and C) in the housing bore (3), of which the central one (B) is connected to the secondary connection (19) and the two outer ones (A and C) are connected to the primary connection (18) and the pressure relief connection (20) respectively, and
c) the control spool (9) is axially settable from the exterior from its above-mentioned basic position against the force of the control spring (16) for pressure presetting purposes.

2. A pressure regulating valve according to claim 1 characterised in that on the central piston (11) of the control spool (9) its oppositely disposed ends form a first control edge (38) in the connection of the primary connection (18) to the secondary connection (19) and a second control edge (39) in the connection of the secondary connection (19) to the pressure relief connection (20).

3. A pressure regulating valve according to claim 1 or claim 2 characterised in that the annular piston and the control sleeve are of a two-part configuration.

4. A pressure regulating valve according to one of claims 1 to 3 characterised in that the working spring (26) is in the form of a coil compression spring which is supported with its end remote from the control sleeve (5) in a spring housing (27).

5. A pressure regulating valve according to one of claims 1 to 4 characterised in that the control spring (16) is in the form of a coil compression spring which is supported with its end remote from the control spool (9) against the end portion of the control sleeve (5).

6. A pressure regulating valve according to one of claims 1 to 5 characterised in that the control spool (9) at its outer end has an extension portion (14) which projects out of the valve housing (1) and which is directly or indirectly connected to an actuating element (17) for axial displacement.

7. A pressure regulating valve according to claim 6 characterised in that the actuating element (17) has a spindle drive (35, 33) and an electric motor (34), for example a stepping motor.

## Revendications

1. Vanne réductrice de pression à commande directe pour des installations hydrauliques avec une boîte à vanne avec un raccordement primaire (18), un raccordement secondaire (19) et un raccordement de décharge de pression (20), et avec un élément de commande dans un perçage de boîte et avec un élément d'actionnement pour le réglage de la pression, caractérisé par des caractéristiques suivantes :
a) dans le perçage de boîte (3, 4), une douille de commande (5) chargée par un ressort de travail (26) est logée de façon déplaçable axialement qui délimite à l'extrémité intérieure un espace (25) relié au raccordement de décharge de pression (20) et qui est réalisée à l'extérieur sous forme de piston annulaire (6) qui délimite dans le perçage de boîte (4) une enceinte de pression de commande (8) qui est reliée continuellement au raccordement secondaire (19) et dont la pression intérieure agit contre la force élastique du ressort de travail (26),
b) la douille de commande (5) comporte dans son perçage de douille (13) une valve à tiroir (9) chargée par un ressort de commande (16) avec trois pistons (10, 11, 12) disposés les uns derrière les autres à une distance axiale, de même diamètre, dont le piston médian (11) recouvre dans la position de base une rainure périphérique (31.1) dans la douille de commande (5) tandis qu'il est disposé librement respectivement entre un piston externe (10, 12) et le piston médian (11) respectivement une rainure périphérique (30.1) et (32.1) supplémentaire, se trouvant dans la douille de commande (5), chacune des rainures périphériques (30.1, 31.1 et 32.1) étant reliée par des perçages radiaux (30, 31 et 32) à respectivement une rainure phériphérique (A, B et C) dans le perçage de boîtier (3) dont celle au milieu (B) est reliée au branchement secondaire (19) et les deux à l'extérieur (A et C) au branchement primaire (18) et, respectivement au branchement de décharge de pression (20) ; et
c) la valve à tiroir (9) peut être réglée axialement depuis l'extérieur depuis sa position de base mentionnée avant à l'encontre de la force du ressort de commande (16) pour anticipation de la pression.

2. Vanne de régulation de pression selon la revendication 1, caractérisée en ce qu'au piston central (11) de la valve de commande (9), ses extrémités frontales opposées forment une première arête de commande (38) dans la liaison du raccordement primaire (18) au raccordement secondaire (19) et une deuxième arête de commande (39) dans la liaison du raccordement secondaire (19) au raccordement de décharge de pression (20).

3. Vanne de régulation de pression selon la revendication 1 ou 2, caractérisée en ce que le piston annulaire et la douille de commande sont réalisés en deux parties.

4. Vanne de régulation de pression selon l'une des revendications 1 à 3, caractérisée en ce que le ressort de travail (26) est réalisé sous forme de ressort cylindrique de compression qui prend appui par son extrémité éloignée de la douille de commande (5) dans un boîtier de ressort (27).

5. Vanne de régulation de pression selon l'une des revendications 1 à 4, caractérisée en ce que le ressort de commande (16) est réalisé sous forme de ressort cylindrique de compression qui prend appui par son extrémité éloignée de la valve à tiroir (9) au fond de la douille de commande (5).

6. Vanne de régulation de pression selon l'une des revendications 1 à 5, caractérisée en ce que la valve à tiroir (9) présente un prolongement (14) dépassant à son extrémité extérieure de la boîte à vanne (1) qui est relié directement ou indirectement à un élément d'actionnement (17) en vue d'un ajustement axial.

7. Vanne de régulation de pression selon la revendication 6, caractérisée en ce que l'élément d'actionnement (17) présente un entraînement à broche (35, 33) et un moteur électrique (34), par exemple un moteur pas-à-pas.
